(19) Europäisches Patentamt
European Patent Office
Office européen des brevets

(11) **EP 4 703 217 A1**

(12) **EUROPEAN PATENT APPLICATION**

(43) Date of publication:
04.03.2026 Bulletin 2026/10

(21) Application number: 24197344.5

(22) Date of filing: 29.08.2024

(51) International Patent Classification (IPC):
**B60T 8/171** (2006.01)    **B60T 8/172** (2006.01)
**B60T 8/174** (2006.01)    **B60T 8/1761** (2006.01)
**B60W 50/00** (2006.01)

(52) Cooperative Patent Classification (CPC):
**B60T 8/17616; B60T 8/171; B60T 8/172;**
**B60T 8/174; B60W 50/0097;** B60W 2050/0031;
B60W 2520/26; B60W 2720/26

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Volvo Truck Corporation**
**405 08 Göteborg (SE)**

(72) Inventors:
• **JONASSON, Mats**
**433 49 PARTILLE (SE)**
• **LAINE, Leo**
**414 84 GÖTEBORG (SE)**
• **BRATTBERG, Björn**
**644 33 TORSHÄLLA (SE)**
• **KUMRU, Murat**
**413 06 GÖTEBORG (SE)**

(74) Representative: **Kransell & Wennborg KB**
**P.O. Box 2096**
**403 12 Göteborg (SE)**

(54) **LEARNED TIRE SLIP-POWER/ OR -FORCE CHARACTERISTICS FOR VEHICLES OR MACHINES**

(57) A computer system (300) is provided, including processing circuitry (310) configured to use a non-parametric probabilistic model (320) to obtain a prediction of how longitudinal tire force depends on longitudinal slip and one or more confidence intervals for the prediction, based on observations indicative of longitudinal slip and longitudinal tire force of a vehicle or machine. The processing circuitry is further configured to control a longitudinal slip of a vehicle or machine based on the prediction and the one or more confidence intervals. A corresponding vehicle or machine, computer program product and computer-readable storage medium are also provided.

*Fig. 3*

## Description

### TECHNICAL FIELD

The disclosure relates generally to the field of vehicles or machines, such as heavy-duty/commercial vehicles and/or pieces of heavy machinery. In particular aspects, the disclosure relates to tire slip-power (or -force) characteristics of such vehicles or machines, and how to estimate and e.g. use such characteristics for active slip control. The disclosure can be applied to e.g. heavy-duty vehicles/construction equipment. Although the disclosure may be described with respect to a particular vehicle or machine, the disclosure is not restricted to any particular vehicle or machine.

### BACKGROUND

Longitudinal tire slip is a measure of how much a surface speed of a wheel (or tire) of a vehicle (or machine) differs from a speed of the vehicle in a plane of the wheel. Phrased differently, longitudinal tire slip (or just "longitudinal slip") indicates whether the wheel is e.g. currently spinning, skidding or sliding relative to the ground on which the vehicle is driven.

A slip controller may be provided to actively control the longitudinal slip of a wheel, and to e.g. control how much propulsion and/or braking torque that is applied to the wheel such that the longitudinal slip of the wheel is actively controlled to match a longitudinal slip request. The longitudinal slip request may for example be provided by a slip reference generator, which may, based on a control strategy and current driving conditions, decide which longitudinal slip request that is to be sent to the slip controller.

How much longitudinal tire force that a tire is able to produce depends on the longitudinal slip of the wheel/tire, and the longitudinal slip that corresponds to a maximum longitudinal tire force may be referred to as "peak slip", or similar. To achieve maximum traction, a job of the slip reference generator is thus to figure out what longitudinal slip that corresponds to such a peak slip, and to instruct the slip controller accordingly. For example, the slip reference generator may assume that maximum longitudinal tire force is obtained at a longitudinal slip of e.g. 10%, and the slip controller may attempt to reach this value by actively controlling how much propulsion and/or braking torque that is applied to the wheel.

A challenge is however that exactly how the longitudinal tire force depends on longitudinal slip changes with for different road conditions, and attempting to always achieve maximum longitudinal tire force (i.e. traction) is thus difficult, especially for vehicles that drives over a variety of different surfaces, such as wet mud, gravel, sand, snow, ice, and similar. For example, on asphalt, longitudinal tire force may peak at around 7% longitudinal slip, but at around 30% in mud. In addition, when for example turning a vehicle, it may be desirable to reduce the longitudinal tire force to be able to generate more lateral tire force instead, and to maintain some margin to the peak longitudinal tire force value. Knowledge may thus be required not only about where peak slip is, but also about how longitudinal tire force generally depends on longitudinal slip.

In light of the above, the present disclosure aims at providing a solution for how to obtain such knowledge, i.e. about tire slip-force characteristics and similar, for a vehicle or machine.

### SUMMARY

According to a first aspect of the disclosure, there is provided a computer system that includes processing circuitry. The processing circuitry is configured to use a non-parametric probabilistic model to obtain a prediction of how longitudinal tire force depends on longitudinal slip and one or more confidence intervals for the prediction, based on observations indicative of longitudinal slip and longitudinal tire force of a vehicle or machine. The processing circuitry is further configured to control a longitudinal slip of a vehicle or machine based on the prediction and the one or more confidence intervals. The first aspect of the disclosure may seek to solve the problem of how to obtain knowledge about tire slip-force characteristics and similar for a vehicle or machine. A technical benefit may include that in addition to where the peak slip value is located, how the longitudinal tire force depends on slip may also be estimated and used to control the motion of the vehicle or machine, resulting in a more efficient slip control that is capable of adapting to changing ground/surface conditions.

Optionally, in some examples, including in at least one preferred example, the probabilistic model may be a Gaussian process regression-type model. A technical benefit may include that such a model may be particularly useful in situations wherein there may for example not be measurements of slip and corresponding longitudinal tire force available in some regions of slip, and similar.

Optionally, in some examples, including in at least one preferred example, the probabilistic model may include a state space approximation of the Gaussian process. A technical benefit may include that the computational complexity of the problem can be reduced, allowing the envisaged solution to be implemented on less complex and e.g. more cost-effective hardware.

Optionally, in some examples, including in at least one preferred example, the observations may include observations of wheel rotational speed and vehicle or machine speed. A technical benefit may include that e.g. the slip may be calculated from such observations.

Optionally, in some examples, including in at least one preferred example, the observations may include observations of wheel torque. A technical benefit may include that wheel torque and wheel rotational/angular speed can be used to calculate wheel power, and in that longitudinal tire force can be derived from such calculated wheel power.

Optionally, in some examples, including in at least one preferred example, the processing circuitry may be configured to express longitudinal slip of a wheel in terms of mechanical or electrical power. A technical benefit may include that measuring power may be easier than measuring longitudinal tire force, especially if one or more electrical machines are used for propulsion of the vehicle or machine. As envisaged herein, the power referred to is the mechanical power at the wheel level. The power at the wheel level may be obtained by knowledge of how a mechanical power delivered by a power unit (such as e.g. an electrical machine) is divided/distributed among the wheels of the vehicle or machine.

Optionally, in some examples, including in at least one preferred example, the processing circuitry may be further configured to update the prediction and/or the one or more confidence intervals based on one or more observations indicative of longitudinal slip and longitudinal tire force (or wheel power) made during operation of the vehicle. A technical benefit may include that the model may thus be dynamic, and capable of adapting to new ground/surface conditions and/or to take into account observations of new observed tire force and slip values not previously observed.

Optionally, in some examples, including in at least one preferred example, the processing circuitry may be further configured to determine, based on the one or more confidence intervals, than an uncertainty of the prediction of longitudinal tire force for one or more first values of longitudinal slip exceeds a threshold value. The processing circuitry may be further configured to (e.g. in response to determining that the uncertainty exceeds the threshold value) control the longitudinal slip of the vehicle or machine to match the one or more values of longitudinal slip, such that the one or more observations made during operation of the vehicle or machine include one or more observations indicative of longitudinal tire force at the one or more first values of longitudinal slip. A technical benefit may include that the uncertainty of the model in this regions may thus be reduced, by actively controlling the longitudinal slip such that observations of corresponding longitudinal tire force (and/or wheel power) for these slip values may be obtained.

Optionally, in some examples, including in at least one preferred example, the processing circuitry may be further configured to, based on the prediction, estimate a longitudinal slip value for which a maximum longitudinal tire force is attained, and to control the longitudinal slip of the vehicle or machine in accordance with this longitudinal slip value. A technical benefit may include that the envisaged model may thus be used to find the so-called peak slip value and to control the vehicle or machine to operate at peak slip, in situations where a resulting maximum longitudinal tire force is desirable.

Optionally, in some examples, including in at least one preferred example, the processing circuitry may be further configured to determine, based on the one or more confidence intervals, that an uncertainty of prediction exceeds a threshold value and, in response to this determining, instead control the longitudinal slip of the vehicle or machine in accordance with a predefined longitudinal slip value and/or with a predefined longitudinal tire force-slip dependence. A technical benefit may include that the envisaged solution may thus avoid controlling the vehicle or machine using too uncertain predictions, and instead revert back to predefined values.

Optionally, in some examples, including in at least one preferred example, the non-parametric probabilistic model may include a forgetting factor such that, for the prediction, newer observations may be given more weight than older observations. A technical benefit may include that the model may thus be made more adaptable to changing conditions, which may be particularly useful for vehicles or machines that regularly drive over different surfaces/grounds.

Optionally, in some examples, including in at least one preferred example, the processing circuitry may be further configured to establish separate non-parametric probabilistic models for different geographical locations (and/or areas), and to select which probabilistic model to use based on an indication of a current geographical location of the vehicle or machine (such as e.g. obtained from suitable geo-positioning solutions). A technical benefit may include that the envisaged solution may be improved wherein the differences in longitudinal tire force-slip dependence between two regions are too great to capture using only a single model, and in that the longitudinal tire force-slip dependency in each region/location may thus be captured with less tradeoff.

Optionally, in some examples, including in at least one preferred example, the processing circuitry may be further configured to select, out of a plurality of slip control strategies and based on the one or more confidence intervals, a particular slip control strategy, and to control the longitudinal slip of the vehicle or machine in accordance with the (selected) particular control strategy. A technical benefit may include that the control is thus performed based on the uncertainty of the predictions, and in that e.g. a more aggressive strategy may be chosen only when the uncertainty is low, and vice versa. Phrased differently, the envisaged solution allows to use and tailor different control strategies for different uncertainties of the predictions, which can further enhance the overall control of the vehicle or machine.

Optionally, in some examples, including in at least one preferred example, the plurality of control strategies may include a first control strategy with a goal of maximizing longitudinal tire force and a second control strategy with a goal of minimizing or reducing tire wear. A technical benefit may include that whether to use one or the other of such often conflicting strategies may thus be decided based on the uncertainty of the predictions.

Optionally, in some examples, including in at least one preferred example, the processing circuitry may be further configured to estimate, based on the one or more confidence intervals, lower and upper bounds of tire friction of the vehicle or machine, and to control a motion of the vehicle or machine based on at least one of the lower and upper bounds of tire friction. A technical benefit may include that vehicle motion may thus be planned more safely, e.g. by assuming that the obtainable tire friction is somewhere in between the lower and upper bounds.

According to a second aspect of the present disclosure, there is provided a vehicle or machine. The vehicle or machine includes at least one wheel, and the computer system of the first aspect (or any example thereof) for controlling longitudinal slip of the at least one wheel. The second aspect may seek to solve the problem of how to provide a vehicle or machine with improved slip control, for the same reasons as already described herein. As envisaged herein, a vehicle may be any type of vehicle such as e.g. an automobile, a truck, a bus, a tractor unit, or similar, and/or any type of machine (e.g. a piece of heavy machinery) such as an excavator, (articulated hauler), wheel loader, or similar, for which there is a desire to more accurately control slip in order to obtain a desired (and/or optimal/maximum) longitudinal tire force, and where the exact relationship between tire force and slip is not known beforehand for different surface types, and similar.

According to a third aspect of the present disclosure, there is provided a computer-implemented method. The method includes using, by processing circuitry of a computer system (such as that of the first aspect), a non-parametric probabilistic model to obtain a prediction of how longitudinal tire force depends on longitudinal slip and one or more confidence intervals for the prediction, based on observations indicate of longitudinal slip and longitudinal tire force (and/or wheel power) of a vehicle or machine, and controlling, by the processing circuitry, a longitudinal slip of a vehicle or machine based on the prediction and the one or more confidence intervals. The third aspect may seek to solve the problem of how to provide a method of improving slip control as described earlier herein. In general, it is noted that the vehicle or machine for which the slip is controlled may not necessarily be the same vehicle or machine from which the observations used to make the predictions are made. For example, the model may also be trained using observations from one vehicle, and then used to control the slip of another (preferably similar) vehicle or machine. This may be beneficial for example in a fleet of (similar) vehicles or machines, wherein knowledge learned from one vehicle or machine may thus be transferred/used to/for another vehicle or machine of the fleet.

According to a fourth aspect of the present disclosure, there is provided a computer program product including program code for performing, when executed by processing circuitry (such as that of the computer system of the first aspect and/or as referred to in the method of the third aspect), the method of the third aspect (or any example thereof discussed herein).

According to a fifth aspect of the present disclosure, there is provided a non-transitory computer-readable storage medium including instructions which, when executed by processing circuitry (such as that of the computer system of the first aspect and/or as referred to in the method of the third aspect), the method of the third aspect (or any example thereof discussed herein).

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1** illustrates an example of how longitudinal tire force may depend on longitudinal slip for different road surface conditions.

**FIG. 2** schematically illustrates an example of how the relationship between longitudinal tire force and slip may be learned, according to examples of the present disclosure.

**FIG. 3** schematically illustrates various examples of a computer system, according to examples of the present disclosure.

**FIG. 4** schematically illustrates a flowchart of various examples of a method, according to examples of the present disclosure.

**FIGS. 5A, 5B** and **5C** schematically illustrate various examples of learned longitudinal tire force-slip characteristics, according to examples of the present disclosure.

**FIGS. 6A, 6B** and **6C** schematically illustrate various examples of learned longitudinal tire force-slip characteristics, for a different road surface condition, according to examples of the present disclosure.

**FIGS. 7A** and **7B** schematically illustrate various examples of vehicles or machines, according to examples of the present disclosure.

**FIG. 8** is a schematic diagram of an exemplary computer system for implementing examples disclosed herein, according to examples of the present disclosure.

## DETAILED DESCRIPTION

The detailed description set forth below provides information and examples of the disclosed technology with sufficient detail to enable those skilled in the art to practice the disclosure. If not stated to the contrary, the terms "longitudinal tire slip" and "slip" will be used interchangeably. The same applies to the terms "longitudinal tire force" and "tire force" that will be used interchangeably as well. As used herein, a vehicle may be e.g. a road vehicle or an off-road vehicle, e.g. a truck, bus, or any other type of (heavy-duty) and/or commercial vehicle. As used herein, a machine may e.g. be a piece of heavy/construction equipment, such as a wheel loader, a (articulated) hauler/dump truck, wheeled excavator, tractor, or any other type of working machine. If not stated to the contrary, any discussion, feature or advantage stated with reference to a "vehicle" is considered to apply also to a "machine", and vice versa, as both vehicles and machines are envisaged as having one or more tires for which there may be a desire to control a slip when driving on a ground surface (or any other suitable surface). In addition, when referring herein to a "wheel" or "tire", it is envisaged that the same or similar solution may be used also for vehicles or machines equipped with one or more tracks, e.g. for all machines and vehicles wherein force is transferred to ground via wheels/tires, tracks or any other suitable means, and for which the longitudinal such force depends on longitudinal slip of the means used to transfer the force.

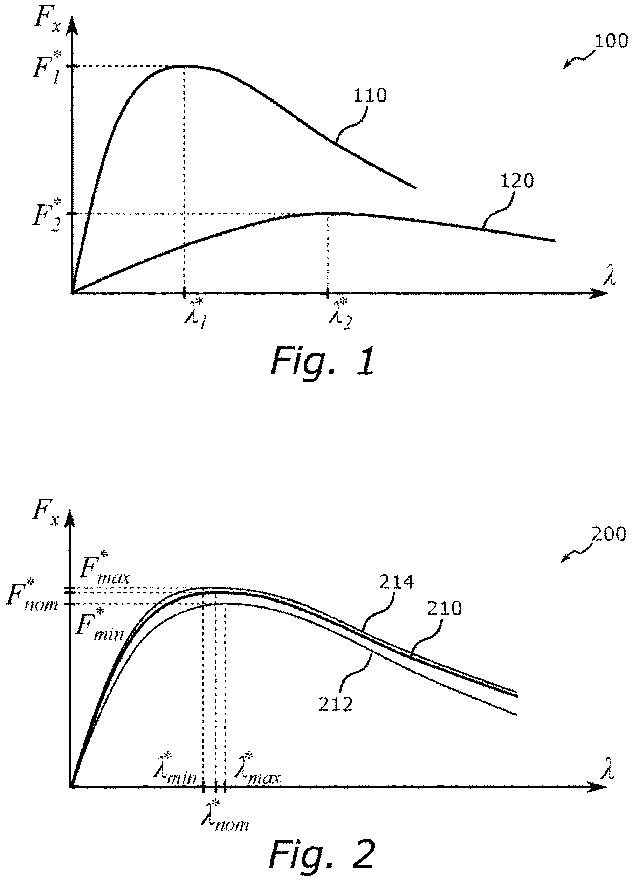

**FIG. 1** shows a plot 100 that schematically illustrates how tire force $F_x$ may depend on slip $\lambda$ for difference (road) surface conditions. The curve 110 illustrates how $F_x$ may depend on slip $\lambda$ on gravel, while the curve 120 illustrates how $F_x$ may depend on $\lambda$ on mud. As can be derived from FIG. 1, for each surface type, a maximum tire force is obtained at a particular slip value, i.e. a maximum tire force $F_1^*$ is obtained at slip $\lambda_1^*$ for gravel, and a maximum tire force $F_2^*$ is obtained at slip $\lambda_2^*$ for mud. Depending on the surface type, the maximum tire force is thus different for each surface type, and occurs at different values of slip. The value of $\lambda$ at which the maximum tire force is obtained may be referred to as "peak slip". In mud, and in particular on machines such as articulated haulers/dump trucks and similar with their coarse/rough tire tread patterns, the wheels may act partially as propellers, explaining why the value $\lambda_2^*$ is larger than $\lambda_1^*$.

FIG. 1 provides one example of how optimal traction and/or tire force may thus be difficult for a slip controller to achieve, if the peak slip value for the current surface condition is not known, and in particular for vehicles that operate under changing surface conditions (such as between e.g. wet mud, gravel, rock, etc.).

In some situations, it may also be desirable to move the longitudinal tire slip away from the peak slip value for various reasons, depending on the current driving situation. For example, when driving straight ahead and when tire forces need to be maximized, controlling the slip at least close to the peak slip value is desirable. However, if the vehicle/machine is instead turning, selecting a longitudinal slip value away from the peak (longitudinal) slip value may be more preferable to better preserve or allow lateral tire forces. This because the longitudinal and lateral tire forces are coupled, and the so-called "friction circle" may govern how much lateral tire force that is available for a particular longitudinal tire force, and in that both of the longitudinal and lateral tire forces cannot be maximized simultaneously. As a consequence, where to put the longitudinal tire slip may require knowledge not only about where peak slip occurs but also how more exactly the longitudinal tire force $F_x$ depends on $\lambda$.

The present disclosure aims at providing a solution in which a computer system, such as used to implement a slip controller, is able to learn not only the peak slip but also e.g. how $F_x$ more generally depends on $\lambda$, such that this knowledge can be used to control the (longitudinal) slip of a vehicle or machine based on the current driving situation.

In particular, as will now be described in more detail with reference to FIG. 2, the present disclosure provides a solution wherein how e.g. tire force depends on slip is learned based on historical observations, e.g. based on historical driving data. Even more in particular, the present disclosure envisages to provide a solution in which e.g. how tire force depends on slip is also complemented by a calculated uncertainty of the given estimations, which can allow e.g. the slip controller or any other system of the vehicle or machine which uses the estimated tire force-slip characteristics to decide whether to use the estimations or whether to e.g. fall back to predefined values or similar.

**FIG. 2** shows a plot 200 of how the present disclosure envisages to provide an estimate (or prediction) 210 of how $F_x$ depends on $\lambda$, together with one or more confidence intervals for such predictions. For example, the envisaged solution may provide (e.g. define) the curve 210 together with additional curves 212 and 214, wherein curves 212 and 214 define, respectively, lower and upper limits of a particular confidence interval, such as e.g. a sigma-interval, two-sigma interval, a three-sigma interval, etc., where "sigma" (or $\sigma$) is the standard-deviation. Correspondingly, it is envisaged to, in some examples, provide (based on e.g. derivatives of the curves 210, 212 and 214 with respect to $\lambda$) not only the nominal peak

slip $\lambda^*_{nom}$ corresponding to a nominal maximum tire force $F^*_{nom}$, but also e.g. lower and upper limits $\lambda^*_{min}$ and $\lambda^*_{max}$ corresponding to lower and upper tire forces $F^*_{min}$ and $F^*_{max}$, respectively. For example, using a two-sigma confidence interval, the envisaged solution may thus provide a nominal peak slip $\lambda^*_{nom}$, as well as estimations $\lambda^*_{min}$ and $\lambda^*_{max}$ such that with 95% confidence, the real peak slip is expected to lie within the interval between these lower and upper limits.

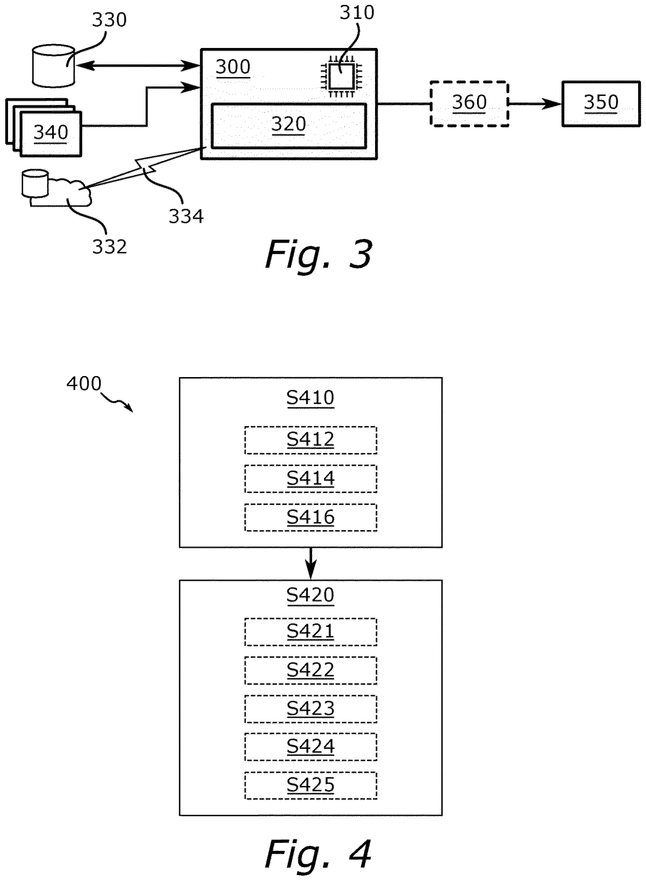

**FIG. 3** schematically illustrates various examples of a computer system 300 as envisaged herein, for the purpose of learning such tire force-slip characteristics.

**FIG. 4** schematically illustrates a flowchart of various examples of a method 400 performed by such a computer system 300.

The computer system 300 includes processing circuitry 310 that is configured to perform the method 400, either by directly executing the corresponding operations described herein and/or by indirectly, by communicating with one or more other entities of the computer system 300 and/or the vehicle or machine in which the computer system 300 is to be included (or configured to control, e.g. remotely), cause the execution of such operations.

The processing circuitry 310 is configured to obtain observations indicative of longitudinal slip and longitudinal tire force of a vehicle. The observations may for example be obtained from a storage 330 internal or external to the computer system 300, from one or more sensors 340 of the vehicle, and/or from e.g. a cloud-based service 332 via a wireless link 334. Exactly how the observations are obtained is not important, as long as they are for a similar vehicle/machine and/or obtained from/for a vehicle/machine with similar tires and for which similar tire force-slip characteristics can be expected.

The processing circuitry 310 is configured to use (e.g. implement, and as part of an operation S410 of the method 400) a non-parametric probabilistic model 320 to obtain both a prediction/estimation of how tire force $F_x$ depends on slip $\lambda$, as well as one or more confidence intervals for the prediction, based on the observations obtained from any single one (or combination of) 330, 332 and 340. Obtaining the observations may for example be performed by the processing circuitry 310 as part of an operation S412 of the method 400. The observations may be historical and/or include current observations from the vehicle during driving.

The processing circuitry 310 is further configured to control, either directly or indirectly, and as part of an operation S420 of the method 400, a longitudinal slip of a vehicle/machine based on the prediction and on the one or more confidence intervals. For example, the processing circuitry 310 may be configured to output a reference slip (value) to a slip controller 350 of the vehicle/machine, or similar, and/or e.g. to output data to one or more intermediate entities 360 that in turn may, based on this data, derive the desired slip (value) for the vehicle and control, directly or indirectly, the slip of the vehicle based thereon. In other examples, the computer system 300 may itself be, or form part of, or implement a whole or at least a part of, such slip control functionality, in which case e.g. 350 and/or 360 may be internal to the computer system 300. It is of course not important exactly what part of the vehicle that performs which function, as long as there is something corresponding to the computer system 300 that uses the model 320 to predict tire force-slip characteristics as well as one or more confidence intervals for the predictions. Consequently, as also envisaged herein, the entity 350 and/or 360 can be any part of the vehicle/machine that is interested in known such tire force-slip characteristics, and which may thus receive the predictions (and confidence interval(s)) from the computer system 300 and use this information for whatever functionality it is currently providing. In what follows, it will for exemplifying purposes be assumed that the computer system 300 is responsible for controlling the slip of the vehicle, or at least configure to instruct a corresponding slip controller of the vehicle accordingly.

The observations may for example include observations of wheel rotational speed $\omega$ (given in e.g. revolutions per second, or similar) and vehicle (longitudinal) speed $v_x$. One of the sensors 340 may for example be configured to measure how fast one or more wheels of a vehicle is spinning, and another one of the sensors 340 may for example be configured to measure how fast the vehicle is moving (longitudinally) over ground. For the latter, the sensor may for example be a radar sensor to measure true ground speed, or similar. Longitudinal wheel slip $\lambda$ may for example be defined as

$$\lambda = -\frac{v_x - r\omega}{v_x}, \qquad\qquad (1a)$$

where r is wheel radius at the point of contact with ground, and $v_x$ is the speed of the vehicle in the plane of the tire. With this definition, a positive slip $\lambda$ thus indicates that the wheel is spinning, while a negative slip $\lambda$ indicates that the wheel is instead skidding. If the wheels are not rotating (e.g. if fully braked/locked), $\lambda = -1$. If the wheels are rotating without the vehicle moving, i.e. if $r\omega \neq 0$ and $v_x = 0$, the slip is $\lambda = +\infty$.

The present disclosure envisages that the longitudinal tire force F (or $F_x$) resulting from a particular longitudinal slip ($\lambda$) is governed by an unknown function $f$, i.e. such that $F = f(\lambda)$. An objective of the envisaged solution is to model the function $f$ based on observed data points $D$ (e.g. observations of corresponding pairs of tire force and slip ($F_i$, $\lambda_i$) made at different time-instances $i$), i.e. based on observations of the unknown function $f$ at points $\lambda_i$.

As an example, under the starting assumption that there are many possible functions that fit a set of observed points, a Gaussian process may be used to describe a probability distribution over such possible functions, and the means can be computed to represent a maximum likelihood of the function, and the variances as an indicator of a confidence of the prediction. Starting from a function prior, the function prior is updated with new observations, a Gaussian process model is used as a probability over possible functions where any finite samples of functions being jointly Gaussian distributed, and the mean function is derived from a posterior distribution of possible functions and used as the function for the regression predictions.

The regression function may be modelled by a multivariate Gaussian given by

$$P(\boldsymbol{f}|\boldsymbol{\lambda}) = \mathcal{N}(\boldsymbol{f}|\boldsymbol{\mu}, \boldsymbol{K}),$$

where $\lambda = [\lambda_1, \lambda_2, \dots, \lambda_n]$ represents the observed slip values, $\boldsymbol{f} = [f(\lambda_1), f(\lambda_2), \dots, f(\lambda_n)]$ the observed function values, $\boldsymbol{\mu} = [\mu(\lambda_1), \mu(\lambda_2), \dots, \mu(\lambda_n)]$ the mean function, and where $K_{ij} = k(\lambda_i, \lambda_j)$ is a (positive definite) kernel function. With no prior observations, it may be assumed that $\mu(\lambda) = 0$, i.e. that the data is normalized to zero mean, and the Gaussian process model is thus a distribution over functions whose shapes are defined by $\boldsymbol{K}$. Under this assumption, the value of the function $f$ at a new observed points $\lambda_*$ is thus predicted as $\boldsymbol{f}_* = \boldsymbol{f}(\lambda_*)$.

The joint distribution of $\lambda$ and $\lambda_*$ may be expressed as

$$\begin{bmatrix} \boldsymbol{\lambda} \\ \boldsymbol{\lambda}_* \end{bmatrix} \sim \mathcal{N}\left(\begin{bmatrix} \mu(\boldsymbol{\lambda}) \\ \mu(\boldsymbol{\lambda}_*) \end{bmatrix}, \begin{bmatrix} \boldsymbol{K} & \boldsymbol{K}_* \\ \boldsymbol{K}_*^T & \boldsymbol{K}_{**} \end{bmatrix}\right),$$

where $\boldsymbol{K} = K(\lambda, \lambda)$, $\boldsymbol{K}_* = K(\lambda, \lambda_*)$ and $\boldsymbol{K}_{**} = K(\lambda_*, \lambda_*)$, and with the assumption that $(\mu(\lambda), \mu(\lambda_*)) = \boldsymbol{0}$. To obtain the predictions $\boldsymbol{f}_*$, the conditional distribution $P(\boldsymbol{f}_*|\boldsymbol{f}, \lambda, \lambda_*)$ over $\boldsymbol{f}_*$ only is required, and may be obtained using the theorem of marginal and conditional distributions for multivariate normal (Gaussian) distributions, i.e. as

$$\boldsymbol{f}_*|\boldsymbol{f}, \boldsymbol{\lambda}, \boldsymbol{\lambda}_* \sim \mathcal{N}(\boldsymbol{K}_*^T \boldsymbol{K}^{-1} \boldsymbol{f}, \boldsymbol{K}_{**} - \boldsymbol{K}_*^T \boldsymbol{K}^{-1} \boldsymbol{K}_*).$$

The observations of the function values $f(\lambda_i)$ may of course be noisy, e.g. such that we do not observer $f(\lambda)$ but rather $F = f(\lambda) + \varepsilon$, where $\varepsilon$ represent e.g. additive independent and identically distributed (i.i.d.) Gaussian noise with variance $\sigma_n^2$. A prior on such noisy observations may then become $cov(F) = \boldsymbol{K} + \sigma_n^2 \boldsymbol{I}$, and the joint distribution of the observed values and the function values at new points may be defined as

$$\begin{bmatrix} \mathbf{F} \\ \mathbf{f}_* \end{bmatrix} \sim \mathcal{N}\left(\mathbf{0}, \begin{bmatrix} \boldsymbol{K} + \sigma_n^2 \boldsymbol{I} & \boldsymbol{K}_* \\ \boldsymbol{K}_*^T & \boldsymbol{K}_{**} \end{bmatrix}\right).$$

From the conditional distribution, the predictive equations for the Gaussian process regression may be defined as

$$\boldsymbol{f}_*|\boldsymbol{\lambda}, \boldsymbol{F}, \boldsymbol{\lambda}_* \sim \mathcal{N}(\boldsymbol{f}_*, cov(\boldsymbol{f}_*)),$$

where

$$\boldsymbol{f}_* = E(\boldsymbol{f}_*|\boldsymbol{\lambda}, \boldsymbol{F}, \boldsymbol{\lambda}_*) = \boldsymbol{K}_*^T [\boldsymbol{K} + \sigma_n^2 \boldsymbol{I}]^{-1} \boldsymbol{F}$$

and

$$cov(\boldsymbol{f}_*) = \boldsymbol{K}_{**} - \boldsymbol{K}_*^T [\boldsymbol{K} + \sigma_n^2 \boldsymbol{I}]^{-1} \boldsymbol{K}_*,$$

i.e. such that the uncertainty in the predictions depend only on the input values $\lambda$ and $\lambda_*$ and not on the observed outputs $\boldsymbol{F}$, a distinctive property of Gaussian distributions. Introduction of the latent variables/functions $f(\lambda_i)$ renders the model non-parametric, in the sense that how the tire force $F$ depends on the slip $\lambda$ is not limited by any fixed, finite number of parameters (such as in e.g. conventional linear or higher-order regression). Instead, as envisaged herein and as encapsulated by the term "non-parametric", the model entails a (possibly infinite) number of parameters that grows with the size of the observed dataset.

As envisaged herein, the kernel functions $k(\lambda_i, \lambda_j)$ can be selected from well-established options or be customized depending on specific usage scenarios and requirements, such as in terms of smoothness, sparsity, differentiability, and similar. As envisaged herein, the kernel function may also include one or more so-called hyperparameters, $\theta$. For example, the kernel may be defined as a squared exponential kernel on the form

$$k(\lambda_i, \lambda_j) = e^{-\gamma \|\lambda_i - \lambda_j\|^2},$$

where $\gamma$ is a hyperparameter serves as a multiplicative constant to the exponent and defines how close two values of $\lambda$ needs to be in order for the kernel to contribute. As another example, the kernel may be on the form

$$k(\lambda_i, \lambda_j) = \sigma_f^2 e^{-\frac{1}{2l}\|\lambda_i - \lambda_j\|^2},$$

where $\sigma_f$ represents a vertical scale and $l$ a horizontal scale. The vertical scale $\sigma_f$ determines the vertical span of the function, while $l$ indicates the rate at which the correlation between two points $\lambda_i$ and $\lambda_j$ decreases with increasing distance. The value of $l$ may for example influence the smoothness of the resulting estimation of $f(\lambda)$, where an increase of $l$ results in a smoother estimation and where a decrease of $l$ results in a function with more fluctuations. Other kernel types may also be suitable, such as for example Matérn 3/2 or 5/2-based kernels. For example, what kernel to use may be found by comparing the performance of different kernels in terms of their marginal likelihood on the training data.

Hyperparameters may e.g. be tailored based on experience, and/or e.g. determined by for example maximizing the log marginal likelihood

$$\theta^* = \underset{\theta}{\operatorname{argmax}} \ \log p(\boldsymbol{F}|\boldsymbol{\lambda}, \boldsymbol{\theta}),$$

or similar. Likewise, considering hyperparameters, a more generalized prediction equation at new observation points may be formulated as

$$\boldsymbol{f}_*|\boldsymbol{\lambda}, \boldsymbol{F}, \boldsymbol{\lambda}_*, \boldsymbol{\theta} \sim \mathcal{N}\big(\boldsymbol{f}_*, cov(\boldsymbol{f}_*)\big),$$

wherein the covariance may depend not only on $\lambda$ and $\lambda_*$ but also on the selected hyperparameter value(s).

As envisaged herein, Gaussian process regression and similar may be implemented using available packages, such as GPy, GPflow, GPyTorch, using the software Matlab by Mathworks (e.g. "fitrgp" to fit a Gaussian process regression model to observation data), and/or by any other suitable means. If not using an already available package, same or similar functionality may be implemented manually. For further details about Gaussian process regression, reference is made to e.g. C. E. Rasmussen and C. K. I. Williams, Gaussian Processes for Machine Learning, The MIT Press, 2006.

As envisaged herein, other models than those based on Gaussian processes may be used, as long as they are physics-agnostic, non-parametric and probabilistic; capable of extrapolation, and allows output of both predictions/estimates as well as uncertainties of the predictions.

A naive implementation of e.g. Gaussian process regression may have a computational complexity scaling as $\mathcal{O}(n^3)$, where $n$ is the total number of observations. In some situations, this may not be practically feasible, i.e. if the available computational resources are not sufficient to perform the required calculations in time. As envisaged herein, approximative Gaussian process solutions may be used instead, such as those based on the derivation of a state-space model regarding the original Gaussian process model, and wherein the computational complexity may be reduced to e.g. $\mathcal{O}(n)$ or similar. For further details, reference is made to e.g. A. J. Smola and B. Schoellkopf, Sparse greedy matrix approximation for machine leraning, Proceedings of the Seventeenth International Conference on Machine learning: 911-918, and L. Csato and M. Opper, Sparse on-line Gaussian processes, Neural Computation. 14 (3): 641-668. One additional reference is e.g. Chapter 8, *"Approximation Method for Large Datasets"* of the above-referred to publication by Rasmussen and Williams.

As envisaged herein, in some examples, it may be more convenient to instead of longitudinal tire force (as a function of slip) instead discuss power, as it may be easier to e.g. measure power in particular when electrical machines are involved and used for propulsion of the vehicle. The power may be the mechanical power $P_m$ at the wheel level. Depending on the exact configuration of the driveline of the vehicle, the mechanical power output by the power unit (such as an electrical machine or internal combustion engine, ICE) may be divided between multiple wheels of the vehicle.

For a wheel of the vehicle, the physics involved may at least partially be described by the equations

$$J\dot{\omega} = T - rF_x - T_r\text{sign}(\omega), \qquad (1)$$

$$P_m = T\omega, \qquad (2)$$

$$P_m = k\eta P_e, \qquad (3)$$

where $\omega$ (measured in e.g. rad/s) is the wheel angular speed, $J$ (measured in e.g. kg*m^2) is the wheel inertia, $T$ (measured in e.g. Nm) is the wheel shaft torque from the drive line, $F_x$ (measured in e.g. N) is the longitudinal tire force, r (measured in e.g. m) is the tire effective radius, $T_r$ (measured in e.g. Nm) is the torque arising from rolling resistance, $P_m$ (measured in W) is the mechanical power, $\eta$ (unitless) is power efficiency, $P_e$ (measured in e.g. W) is the electrical power from the power source, and k (unitless) is a factor indicating how power from the power unit is split to different wheels (e.g. such that $k = 2$ corresponds to a split to two wheels). If neglecting wheel acceleration and rolling resistance, the force $F_x$ may be solved from equations (1)-(3) as

$$F_x(P_e, \omega) \approx \frac{k\eta P_e}{\omega r} = C\frac{P_e}{\omega},$$

where $C = k\eta/r$ is some constant. The tire force $F_x$ is thus not only depending on power but also on wheel angular speed. As envisaged herein, to eliminate the dependence on wheel angular speed, the tire characteristics may be expressed as a function $P_e = f(\lambda)$ for different speed intervals. In some examples, training observations of power (e.g. $P_e$) may be used directly together with observations of angular speed $\omega$ to teach the model how to predict e.g. power as a function of slip for various speed intervals.

In some examples, the processing circuitry 310 may be configured to update (e.g. as part of a sub operation S414 of the operation S410 of the method 400) the model 320 and/or the prediction and/or one or more confidence intervals based on observations indicative of slip and tire force made during operation of the vehicle. Phrased differently, the processing circuitry 310 may be configured to adapt the model 320 on-line, which may be beneficial if the conditions under which the vehicle is driving and/or e.g. one or more characteristics of the tires change with time. In some examples, processing circuitry 310 may implement the model using one or more forgetting factors, such that e.g. more recent observations are given more weight than more older observations. This may be particularly useful if using a single model for a vehicle that drives over different surface types as part of e.g. a transport mission, as the model may then adapt to new surface types more efficiently.

In some examples, the processing circuitry 310 may be configured to establish (e.g. as part of a suboperation S416 of the method 400) separate/different non-parametric probabilistic models for different geographical locations and/or areas. For example, one model may be assigned to and trained using samples from one particular area, and another model may be assigned to an trained using samples from another particular area, and so on. By so doing, it may be taken advantage of that the ground surface conditions are often somewhat similar throughout an area, but may different between different areas. Such scenarios may for example be present for articulated haulers, wheel loaders and similar driving through multiple such areas, or similar. For example, one Gaussian process regression model may be trained and assigned to coordinates belonging to a first area, another model may be trained and assigned to coordinates belonging to a second area, and similar. The processing circuitry 310 may be configured to receive information (i.e. an indication, such as coordinates) about the current position of the vehicle, e.g. from a satellite navigation receiver (such as GPS, Glonass, Galileo, Beidou, and similar), and check in which of a set of predefined areas the vehicle is currently in, and further check whether there is any model currently trained for that particular area. The various models may thus be optimized for different areas, without having to compromise in order to provide sufficiently good predictions for many different areas in terms of ground surface conditions.

In some examples, the processing circuitry 310 may be configured to determine (e.g. as part of a suboperation S421 of the method 400) that the uncertainty of the predictions (by considering e.g. the accompanying confidence interval) is larger than a predefined value (i.e. threshold) for at least some slip values. The processing circuitry 310 may be further configured to control the slip of the vehicle such that new samples of slip and tire force may be obtained for these slip values, thereby reducing the uncertainty. Phrased differently, as the envisaged solution provides an indication of how certain/uncertain a prediction is, the processing circuitry 310 may control the vehicle to gather more samples in regions of higher uncertainty, such that the model may be updated/further trained and the uncertainty in these regions reduced.

As another example, in response to determining (e.g. as part of a suboperation S423 of the method 400) that the uncertainty of the predicted tire force-slip characteristics is too high in one or more regions, the processing circuitry 310 may instead revert to one or more predefined slip values and/or predefined tire force-slip characteristics. For example, the processing circuitry 310 may store, e.g. as part of storage 330 and/or in the cloud 332, one or more predefined curves or datasets indicative of how tire force and slip are related, and which may be used instead of the predicted ditto in regions where the uncertainty is indicated as being too high. For example, one or more predefined functions $f_{pre}(\lambda)$, indicating how tire force depends on slip in some more or less generalized way, may be stored in e.g. storage 330 and obtained and used by the processing circuitry 310 to control the slip of the vehicle.

Generally herein, the provided uncertainty/confidence interval(s) may also, or instead, be used by one or more other control functions, such that these may decide whether to use the predicted values or e.g. fall back to predefined values in case the uncertainty is above a certain threshold, or similar.

In some examples, the processing circuitry 310 may be configured to use the predictions obtained from the model to estimate (e.g. as part of a suboperation S422 of the method 400) peak slip, i.e. a longitudinal slip value $\lambda_{nom}^*$ at which a maximum tire force $F_{nom}^*$ is attained, and to control the slip of the vehicle/machine in accordance with this value, in order to maximize tire force and e.g. traction. As mentioned earlier herein, the processing circuitry 310 may in some examples be further configured to use the confidence intervals provided by the model to estimate maximum tire force limits $F_{min}^*$ and $F_{max}^*$, and/or e.g. corresponding slip limits $\lambda_{min}^*$, and $\lambda_{max}^*$ but also e.g. lower and upper limits $\lambda_{min}^*$ and $\lambda_{max}^*$ corresponding to lower and upper tire forces $F_{min}^*$ and $F_{max}^*$, respectively, as mentioned with reference to FIG. 2. For example, the processing circuitry 310 and system 300 may thus be made aware of what region of tire force that is obtainable if slip is kept within a certain region, based on the confidence/uncertainty of the predictions. The processing circuitry 310 may consequently, as part of controlling vehicle slip, e.g. decide to have some margin in its decisions.

In some examples, the processing circuitry 310 may be further configured to select (e.g. as part of a suboperation S424 of the method 400) the slip control strategy to use from a plurality of different slip control strategies, based on the certainty of the predictions (e.g. based on the confidence interval(s)). For example, the processing circuitry 310 may be configured to use a less aggressive strategy if the uncertainty in the predictions are higher, and a more aggressive strategy if the uncertainty is lower, or similar. For example, it the uncertainty is low, the strategy may include to e.g. drive to a corner as quickly as possible, under the assumption that the obtainable tire force for a particular slip is as indicated by the prediction. If the uncertainty is high, the strategy may instead include to drive through the corner at a more moderate speed, taking into account that the real obtainable tire force may be different from that indicated by the model/predictions, and similar. Other example strategies may for example include to maximize longitudinal tire force, and another strategy may instead include to minimize or reducing tire wear.

In some examples, the processing circuitry 310 may be configured to estimate (e.g. as part of a suboperation S425 of the method 400) lower and upper bounds of tire friction of the vehicle/machine, based on the provided confidence interval(s). The processing circuitry 310 may be configured to control the motion of the vehicle based on at least one of the lower and upper bounds of tire friction. For example, the lower bound of tire friction can be used to more safely plan the vehicle motion, as expecting less than the true maximum tire friction may add some safety margin that may be useful in critical situations. In other examples, both lower and upper bounds may be used, to e.g. select an expected maximum tire friction lying somewhere in between, such as for example in the middle between the lower and upper bounds, or similar. Here, and also in the previously given examples, it is noted that access to both the predictions as well as their uncertainties is what enables the processing circuitry 310 to make more informative, and safer, decisions when deciding how to control the motion (including e.g. the slip) of the vehicle based on the predictions.

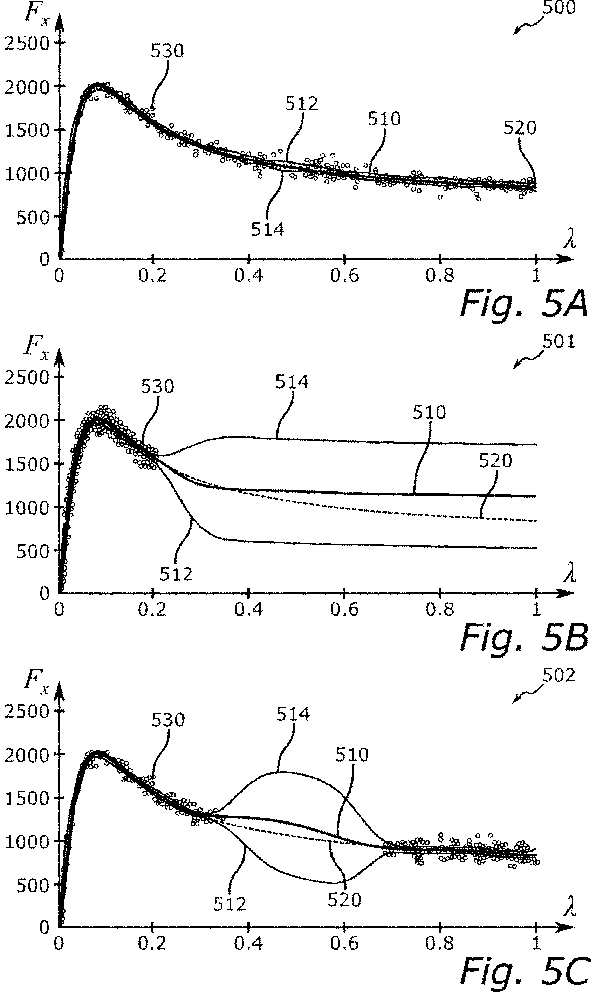

**FIGS. 5A, 5B,** and **5C** illustrate various graphs resulting from numerical simulations performed to validate the envisaged solution.

The relationship between tire force $F_x$ (measured in e.g. Newton) and slip $\lambda_x$ is learned from a plurality of observed tire force-slip value pairs 530, and respective plots 500, 501 and 502 of FIGS. 5A, 5B and 5C, respectively, shows the sample values 530 (i.e. 2), the "ground truth" 510, the (posterior predictive) mean 520 (i.e. predicted values of $F_x$ as a function of $\lambda$, i.e. $F_x = f_*(\lambda_*)$) obtained from the model as well as lower and upper 95% confidence interval limits 512 and 514, respectively. The ground truth function 510 was modelled using the Magic (tire) Formula often attributed to Hans B. Pacejka, as e.g.

$$F_x = A_1 \cdot \sin\{A_2 \cdot \arctan[A_3\lambda - A_4 \cdot (A_3\lambda - \arctan(A_3\lambda))]\},$$

where $A_1$, $A_2$, $A_3$ and $A_4$ are fitting coefficients. Squared exponential kernels $k(\lambda_i, \lambda_j)$ were used in the simulations, with a standard prior of 225 and length scale of 0.1. In the simulations, the prior mean function was not assumed to be zero but instead represented by a parametric function. It is envisaged that a zero prior mean function could also have been used, as it is possible to detect the uncertainty in the posterior predictive variance.

In the examples of FIGS. 5A-5C, the coefficients of the Magic Formula were selected to represent a surface reminiscent of dry asphalt, and normal-distributed noise was added to the observations 530 to simulate real-life conditions. In the example of FIG. 5A, the samples 530 were taken over the full interval $\lambda \in [0,1]$. The predictions 520 follow the ground truth 510 and the confidence interval between 512 and 514 remains small. In the example of FIG. 5B, the samples 530 were limited to the interval $\lambda \in [0,0.2]$. The predictions 520 follow the ground truth 510 at or close to the samples 530, and deviates more from the ground truth 510 when the distance from the sample points 530 increases. The confidence interval between 512 and 514 remains small close to the samples 530, but increases with increasing $\lambda$. In the example of FIG. 5C, the samples 530 were limited to the interval $\lambda \in ([0,0.35] \cup [0.65,1])$. The predictions 520 follow the ground truth 510 at the sample 530, but deviates somewhat from 510 in the interval $\lambda \in [0.35,0.65]$ in which no samples are provided. The confidence interval between 512 and 514 remains small at the samples 530, but grows larger in the region in between $\lambda = 0.35$ and $\lambda = 0.65$. It is noted that due to the parametric, non-zero prior mean function, the posterior predictive mean (i.e. the curve 510) does not approach zero in regions with no observations, such as when $\lambda > 0.2$.

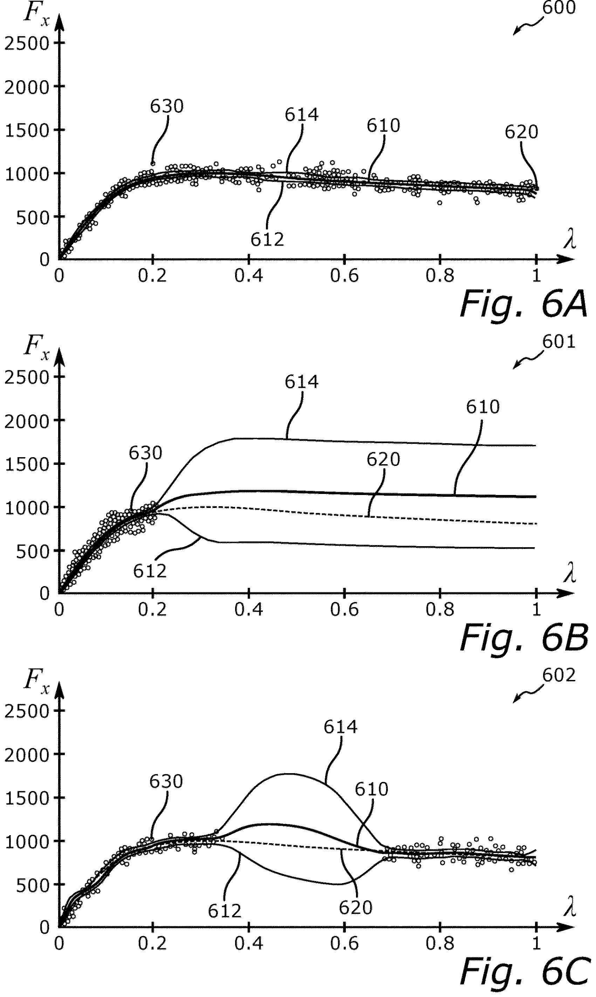

**FIGS. 6A, 6B,** and **6C** also illustrate numerical results in form of plots 600, 601 and 620, respectively, but for a different assumed surface type, including samples 630, ground truth 610, mean/predictions 620 and confidence interval limits 612 and 614, respectively. Here, the coefficients of the Magic Formula were selected to represent a surface reminiscent of mud, and samples 630 are obtained over the intervals $\lambda \in [0,1]$, $\lambda \in [0,0.2]$ and $\lambda \in ([0,0.35] \cup [0.65,1])$ in the examples of FIG. 6A, 6B and 6C, respectively. Also for this surface type, envisaged solution works similarly to the dry asphalt surface type, illustrating how the envisaged solution is adaptable for different surface types.

In summary of these validating tests, it is concluded that the envisaged solution is capable of learning tire force-slip characteristics from a limited number of samples/measurements, and that it is capable of making such predictions for different surface types.

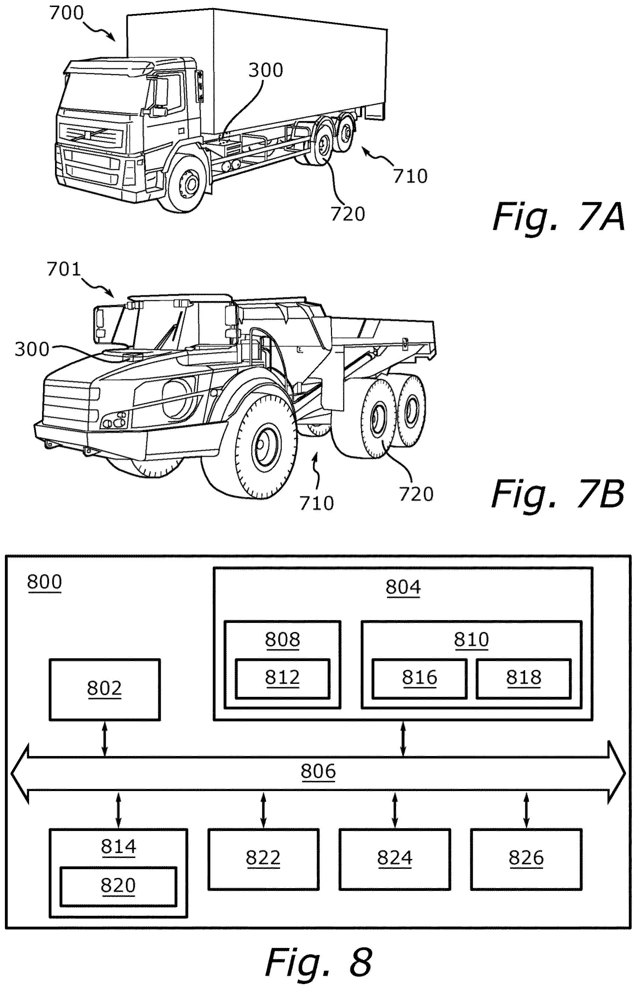

**FIG. 7A** schematically illustrates an example vehicle as envisaged herein, here in the form of a box cargo truck 700. The truck 700 includes at least one wheel 720, and e.g. a traction system 710 for propelling the truck 700 by applying torque to the wheel 720 (and optionally to one or more other wheels of the truck 700). The truck 700 may for example be powered by an internal combustion engine (ICE), one or more electrical machines, and/or by other alternatives for providing torque to the wheel 720. The truck 700 further includes the envisaged computer system 300, such that the computer system 300 can control longitudinal slip $\lambda$ of the at least one wheel 720 as described herein.

**FIG. 7B** schematically illustrates an example machine (e.g. piece of heavy machinery/equipment) as envisaged herein, here in the form of an articulated hauler/dump truck/dumper 701. The dumper 701 includes a traction system 710, at least one wheel 720, a suitable ICE, one or more electrical machines, or similar, for providing torque to the wheel 720, and the computer system 300 as envisaged herein for controlling longitudinal slip $\lambda$ of the at least one wheel 720.

FIGS. 7A and 7B serve only to represent two of many possible examples of vehicles and/or machines as envisaged herein, and primarily illustrates the inclusion of the computer system 300 in such vehicles and/or machines for slip control, wherein the envisaged model is used to learn tire force-slip characteristics from a limited number of observations, and to make predictions of such characteristics in order to establish the functional dependence of tire force on slip, and similar. Other envisaged types of vehicles may for example include tractors, semitrailers, buses, automobiles, and similar, while other envisaged types of machines may include e.g. wheel loaders, road scrapers, excavators, back-hoe loaders, or similar. As envisaged herein, a vehicle or machine may include tracks instead of wheels for propulsion, and the envisaged solution may then serve to control the slip of such tracks relative ground.

**FIG. 8** is a schematic diagram of a computer system 800 for implementing examples disclosed herein, such as the computer system 300 discussed with reference to FIG. 3. The computer system 800 is adapted to execute instructions from a computer-readable medium to perform these and/or any of the functions or processing described herein. The computer system 800 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 800 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 800 may comprise at least one computing device or electronic device capable of including firmware, hardware, and/or executing software instructions to implement the functionality described herein. The computer system 800 may include processing circuitry 802 (e.g., processing circuitry including one or more processor devices or control units, such as the processing circuitry 310), a memory 804, and a system bus 806. The computer system 800 may include at least one computing device having the processing circuitry 802. The system bus 806 provides an interface for system components including, but not limited to, the memory 804 and the processing circuitry 802. The processing circuitry 802 may include any number of hardware components for conducting data or signal processing or for executing computer code stored in memory 804. The processing circuitry 802 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 802 may further include computer executable code that controls operation of the programmable device.

The system bus 806 may be any of several types of bus structures that may further interconnect to a memory bus (with or without a memory controller), a peripheral bus, and/or a local bus using any of a variety of bus architectures. The memory 804 may be one or more devices for storing data and/or computer code for completing or facilitating methods described herein. The memory 804 may include database components, object code components, script components, or other types of information structure for supporting the various activities herein. Any distributed or local memory device may be utilized with the systems and methods of this description. The memory 804 may be communicably connected to the processing circuitry 802 (e.g., via a circuit or any other wired, wireless, or network connection) and may include computer code for executing one or more processes described herein. The memory 804 may include non-volatile memory 808 (e.g., read-only memory (ROM), erasable programmable read-only memory (EPROM), electrically erasable programmable read-only memory (EEPROM), etc.), and volatile memory 810 (e.g., random-access memory (RAM)), or any other medium which can be used to carry or store desired program code in the form of machine-executable instructions or data structures and which can be accessed by a computer or other machine with processing circuitry 802. A basic input/output system (BIOS) 812 may be stored in the non-volatile memory 808 and can include the basic routines that help to transfer information between elements within the computer system 800.

The computer system 800 may further include or be coupled to a non-transitory computer-readable storage medium such as the storage device 814, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 814 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 814 and/or in the volatile memory 810, which may include an operating system 816 and/or one or more program modules 818. All or a portion of the examples disclosed herein may be implemented as a computer program 820 stored on a transitory or non-transitory computer-usable or computer-readable storage medium (e.g., single medium or multiple media), such as the storage device 814, which includes complex programming instructions (e.g., complex computer-readable program code) to cause the processing circuitry 802 to carry out actions described herein. Thus, the computer-readable program code of the computer program 820 can comprise software instructions for implementing the functionality of the examples described herein when executed by the processing circuitry 802. In some examples, the storage device 814 may be a computer program product (e.g., readable storage medium) storing the computer program 820 thereon, where at least a portion of a computer program 820 may be loadable (e.g., into a processor) for implementing the functionality of the examples described herein when executed by the processing circuitry 802. The processing circuitry 802 may serve as a controller or control system for the computer system 800 that is to implement the functionality described herein.

The computer system 800 may include an input device interface 822 configured to receive input and selections to be communicated to the computer system 800 when executing instructions, such as from a keyboard, mouse, touch-sensitive surface, etc. Such input devices may be connected to the processing circuitry 802 through the input device interface 822 coupled to the system bus 806 but can be connected through other interfaces, such as a parallel port, an Institute of Electrical and Electronic Engineers (IEEE) 1394 serial port, a Universal Serial Bus (USB) port, an IR interface, and the like. The computer system 800 may include an output device interface 824 configured to forward output, such as to a display, a video display unit (e.g., a liquid crystal display (LCD) or a cathode ray tube (CRT)). The computer system 800 may include a communications interface 826 suitable for communicating with a network as appropriate or desired.

As a summary of all of the above, present disclosure envisages a solution wherein how longitudinal tire force depends on longitudinal slip is learned by using a non-parametric probabilistic model (such as based on Gaussian process regression or similar), and in particular such that not only the predicted value of tire force for certain slip is provided but also the uncertainty of the prediction. This enables the vehicle to be controlled in an improved way, as how to control the vehicle can be decided based on whether the predictions are deemed sufficiently accurate or not.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The following is a non-exclusive list of examples as envisaged by the present disclosure:

Example 1: A computer system including processing circuitry configured to:

- use a non-parametric probabilistic model to obtain a prediction of how longitudinal tire force depends on longitudinal slip and one or more confidence intervals for the prediction, based on observations indicative of longitudinal slip and longitudinal tire force of a vehicle or machine; and
- control a longitudinal slip of a vehicle or machine based on the prediction and the one or more confidence intervals.

Example 2: The computer system of example 1, wherein the probabilistic model is a Gaussian process regression-type model.

Example 3: The computer system of example 2, wherein the probabilistic model includes a state space approximation of the Gaussian process.

Example 4: The computer system of any one of examples 1 to 3, wherein the observations include observations of wheel rotational speed and vehicle or machine speed.

Example 5: The computer system of any one of the preceding examples, wherein the observations include observations of wheel torque.

Example 6: The computer system of any one of the preceding examples, wherein the processing circuitry is configured to express longitudinal slip of a wheel in terms of mechanical or electrical power.

Example 7: The computer system of any one of the preceding examples, wherein the processing circuitry is further configured to update the prediction and/or the one or more confidence intervals based on one or more observations indicative of longitudinal slip and longitudinal tire force made during operation of the vehicle or machine.

Example 8: The computer system of example 7, wherein the processing circuitry is further configured to:

- determine, based on the one or more confidence intervals, that an uncertainty of the prediction of longitudinal tire force for one or more first values of longitudinal slip exceeds a threshold value, and
- control the longitudinal slip of the vehicle or machine to match the one or more values of longitudinal slip, such that the one or more observations made during operation of the vehicle or machine include one or more observations indicative of longitudinal tire force at the one or more first values of longitudinal slip.

Example 9: The computer system of any one of the preceding examples, wherein the processing circuitry is further configured to, based on the prediction, estimate a longitudinal slip value for which a maximum longitudinal tire force is attained, and control the longitudinal slip of the vehicle or machine in accordance with the said longitudinal slip value.

Example 10: The computer system of any one of the preceding examples, wherein the processing circuitry is further configured to:

- determine, based on the one or more confidence intervals, that an uncertainty of the prediction exceeds a threshold value, and
- in response to said determining, instead control the longitudinal slip of the vehicle or machine in accordance with a predefined longitudinal slip value and/or with a predefined longitudinal tire force-slip dependence).

Example 11: The computer system of any one of the preceding examples, wherein the non-parametric probabilistic model includes a forgetting factor such that, for the prediction, newer observations are given more weight than older observations.

Example 12: The computer system of any one of the preceding examples, wherein the processing circuitry is further configured to establish separate non-parametric probabilistic models for different geographical locations and/or areas, and to select which probabilistic model to use based on an indication of a current geographical location of the vehicle or machine.

Example 13: The computer system of any one of the preceding examples, wherein the processing circuitry is further configured to:

- select, out of a plurality of slip control strategies and based on the one or more confidence intervals, a particular slip control strategy, and
- control the longitudinal slip of the vehicle or machine in accordance with the particular control strategy.

Example 14: The computer system of example 13, wherein the plurality of slip control strategies includes a first control strategy with a goal of maximizing longitudinal tire force and a second control strategy with a goal of minimizing or reducing tire wear.

Example 15: The computer system of any one of the preceding examples, wherein the processing circuitry is further configured to:

- estimate, based on the one or more confidence intervals, lower and upper bounds of tire friction of the vehicle or machine, and
- control a motion of the vehicle or machine based on at least one of the lower and upper bounds of tire friction.

Example 16: A vehicle or machine, including:

- at least one wheel, and
- the computer system of any one of the preceding examples for controlling longitudinal slip of the at least one wheel.

Example 17: A computer-implemented method, including:

- using, by processing circuitry of a computer system, a non-parametric probabilistic model to obtain a prediction of how longitudinal tire force depends on longitudinal slip and one or more confidence intervals for the prediction, based on observations indicative of longitudinal slip and longitudinal tire force of a vehicle or machine; and

- controlling, by the processing circuitry, a longitudinal slip of a vehicle or machine based on the prediction and the one or more confidence intervals.

Example 18: A computer program product including program code for performing, when executed by the processing circuitry, the method of example 17.

Example 19: A non-transitory computer-readable storage medium including instructions which, when executed by the processing circuitry, cause the processing circuitry to perform the method of example 17.

**Claims**

1. A computer system (300, 800) comprising processing circuitry (310, 802) configured to:

   - use (S410) a non-parametric probabilistic model (320) to obtain a prediction (210) of how longitudinal tire force ($F_x$) depends on longitudinal slip ($\lambda$) and one or more confidence intervals (212, 214) for the prediction, based on observations (S412) indicative of longitudinal slip and longitudinal tire force of a vehicle or machine (700, 701); and
   - control (S420) a longitudinal slip of a vehicle or machine based on the prediction and the one or more confidence intervals.

2. The computer system of claim 1, wherein the probabilistic model is a Gaussian process regression-type model.

3. The computer system of claim 1 or 2, wherein the observations comprise observations of wheel rotational speed ($\omega$) and vehicle or machine speed ($v_x$).

4. The computer system of any one of claims 1 to 3, wherein the processing circuitry is configured to express longitudinal slip of a wheel in terms of mechanical ($P_m$) or electrical ($P_e$) power.

5. The computer system of any one of the preceding claims, wherein the processing circuitry is further configured to update (S414) the prediction and/or the one or more confidence intervals based on one or more observations indicative of longitudinal slip ($\lambda_*$) and longitudinal tire force ($f_*$) made during operation of the vehicle or machine.

6. The computer system of claim 5, wherein the processing circuitry is further configured to:

   - determine (S421), based on the one or more confidence intervals, that an uncertainty of the prediction of longitudinal tire force for one or more first values of longitudinal slip exceeds a threshold value, and
   - control the longitudinal slip of the vehicle or machine to match the one or more values of longitudinal slip, such that the one or more observations made during operation of the vehicle or machine comprise one or more observations indicative of longitudinal tire force at the one or more first values of longitudinal slip.

7. The computer system of any one of the preceding claims, wherein the processing circuitry is further configured to, based on the prediction (210), estimate (S422) a longitudinal slip value ($\lambda_{nom}^*$) for which a maximum longitudinal tire force ($F_{nom}^*$) is attained, and control the longitudinal slip of the vehicle or machine in accordance with said longitudinal slip value.

8. The computer system of any one of the preceding claims, wherein the processing circuitry is further configured to:

   - determine (S423), based on the one or more confidence intervals, that an uncertainty of the prediction exceeds a threshold value, and
   - in response to said determining, instead control the longitudinal slip of the vehicle or machine in accordance with a predefined longitudinal slip value and/or with a predefined longitudinal tire force-slip dependence ($f_{pre}(\lambda)$).

9. The computer system of any one of the preceding claims, wherein the processing circuitry is further configured to:

   - select (S424), out of a plurality of slip control strategies and based on the one or more confidence intervals, a particular slip control strategy, and
   - control the longitudinal slip of the vehicle or machine in accordance with the particular control strategy.

10. The computer system of claim 9, wherein the plurality of slip control strategies comprises a first control strategy with a goal of maximizing longitudinal tire force and a second control strategy with a goal of minimizing or reducing tire wear.

11. The computer system of any one of the preceding claims, wherein the processing circuitry is further configured to:

- estimate (S425), based on the one or more confidence intervals, lower and upper bounds of tire friction of the vehicle or machine, and
- control a motion of the vehicle or machine based on at least one of the lower and upper bounds of tire friction.

12. A vehicle or machine (700, 701), comprising:

- at least one wheel (720), and
- the computer system (300) of any one of the preceding claims for controlling longitudinal slip of the at least one wheel.

13. A computer-implemented method (400), comprising:

- using (S410), by processing circuitry (310, 802) of a computer system (300, 800), a non-parametric probabilistic model to obtain a prediction (210) of how longitudinal tire force ($F_x$) depends on longitudinal slip ($\lambda$) and one or more confidence intervals (212, 214) for the prediction, based on observations indicative of longitudinal slip and longitudinal tire force of a vehicle or machine; and
- controlling (S420), by the processing circuitry, a longitudinal slip of a vehicle or machine based on the prediction and the one or more confidence intervals.

14. A computer program product (814) comprising program code (820) for performing, when executed by the processing circuitry, the method of claim 13.

15. A non-transitory computer-readable storage medium (814) comprising instructions which, when executed by the processing circuitry, cause the processing circuitry to perform the method of claim 13.

Fig. 1

Fig. 2

*Fig. 3*

*Fig. 4*

Fig. 5A

Fig. 5B

Fig. 5C

Fig. 6A

Fig. 6B

Fig. 6C

Fig. 7A

Fig. 7B

Fig. 8

Europäisches
Patentamt
European
Patent Office
Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/174246 A1 (KHAJEPOUR AMIR [CA] ET AL) 30 May 2024 (2024-05-30) | 1-5,7, 11-15 | INV. B60T8/171 |
| A | * paragraph [0002] - paragraph [0057]; figures 1-7 * ----- | 6,8-10 | B60T8/172 B60T8/174 B60T8/1761 |
| A | CN 117 787 082 A (UNIV JILIN) 29 March 2024 (2024-03-29) * the whole document * ----- | 1-15 | B60W50/00 |
| A | CN 113 573 966 B (MITSUBISHI ELECTRIC CORP) 29 August 2023 (2023-08-29) * the whole document * ----- | 1-15 | |
| A | CN 117 252 071 A (UNIV JIANGSU) 19 December 2023 (2023-12-19) * the whole document * ----- | 1-15 | |
| A | EP 4 098 503 B1 (SUMITOMO RUBBER IND [JP]) 30 August 2023 (2023-08-30) * the whole document * ----- | 1-15 | |

TECHNICAL FIELDS
SEARCHED      (IPC)

B60T
B60W

The present search report has been drawn up for all claims

| Place of search | Date of completion of the search | Examiner |
|---|---|---|
| Munich | 17 February 2025 | Graniou, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 7344

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2025

| Patent document cited in search report | | Publication date | Patent family member(s) | | Publication date |
|---|---|---|---|---|---|
| US 2024174246 | A1 | 30-05-2024 | NONE | | |
| CN 117787082 | A | 29-03-2024 | NONE | | |
| CN 113573966 | B | 29-08-2023 | CN | 113573966 A | 29-10-2021 |
| | | | EP | 3938263 A1 | 19-01-2022 |
| | | | JP | 7285971 B2 | 02-06-2023 |
| | | | JP | 2022523276 A | 21-04-2022 |
| | | | US | 2020290577 A1 | 17-09-2020 |
| | | | WO | 2020183871 A1 | 17-09-2020 |
| CN 117252071 | A | 19-12-2023 | NONE | | |
| EP 4098503 | B1 | 30-08-2023 | EP | 4098503 A1 | 07-12-2022 |
| | | | JP | 2022184143 A | 13-12-2022 |
| | | | US | 2022379897 A1 | 01-12-2022 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. E. RASMUSSEN** ; **C. K. I. WILLIAMS**. Gaussian Processes for Machine Learning. The MIT Press, 2006
- **A. J. SMOLA** ; **B. SCHOELLKOPF**. Sparse greedy matrix approximation for machine leraning. *Proceedings of the Seventeenth International Conference on Machine learning*, 911-918

- **L. CSATO** ; **M. OPPER**. Sparse on-line Gaussian processes. *Neural Computation.*, vol. 14 (3), 641-668